# EUROPEAN PATENT APPLICATION

(11) **EP 2 395 610 A1**
(43) Date of publication of application: **14.12.2011**
(21) Application number: 10738364.8
(22) Date of filing: 04.02.2010
(51) Int. Cl.: H01R 43/00, H01F 6/06, H01R 4/68, H01R 43/048

(54) **SUPERCONDUCTIVE CONDUCTOR CONNECTING METHOD AND SUPERCONDUCTIVE COIL**

(30) Priority: 05.02.2009 JP 2009024991
(71) Applicant: Kabushiki Kaisha Toshiba, Minato-ku Tokyo 105-8001 (JP)
(72) Inventor: SHIBUYA, Junichi, Yokohama-shi Kanagawa 230-0045 (JP); OGATA, Hiroshige, Yokohama-shi Kanagawa 230-0045 (JP); KOBAYASHI, Takayuki, Tokyo 105-8001 (JP); SHIMADA, Mamoru, Tokyo 105-8001 (JP); NAGAMOTO, Yoshifumi, Tokyo 105-8001 (JP); OOSEMOCHI, Koichi, Tokyo 105-8001 (JP)
(74) Representative: HOFFMANN EITLE
(86) International application number: PCT/JP2010/000672
(87) International publication number: WO 2010/090023

(57) **Abstract**

There are produced two superconductors, in which a superconducting element wire bundle exposed from a conduit is reduced in diameter to be a polygonal shape with a metal die. The superconducting element wires reduced in diameter are covered with a conducting member and banded, and thereafter, covered portions thereof are cut to expose a cross section, inserted in a hallow portion of a a hollow pipe in a manner to engage therewith, and the two superconductors are he ated and joined via cross sections of the superconducting element wires reduced in diameter.

## Description

### FIELD

The present invention relates to a method of connecting superconductors and to a superconducting coil.

### BACKGROUND

A large-size superconducting coil generating an upfield, such as an atomic fusion device or a superconducting energy storage system device, and a superconducting coil used for a power transmission line or the like arc generally produced by preparing plural superconductors and connecting them one to another.

For example, Reference 1 discloses a method in which conduits of both superconductors are removed and filaments of a certain length are exposed from superconducting element wires with nitric acid or the like, bundles of both the filaments in appropriate number are stacked, these filaments arc covered with a connecting piece, and a predetermined temperature and pressure are applied to solid -phase joining the filaments and stabilizing copper, thereby integrating both the conductors. Further, Reference 2 discloses a method in which a stabilizing material of a connecting portion is removed from both superconducting element wires to expose filaments, and the filaments are stacked on each other and are connected by heat treatment while being pressurizing.

Further, Reference 3 discloses a method in which a stabilizing material of a connecting end portion is removed from both chemical compound superconducting element wires, and thereafter filaments in a tube shape are stacked on each other and p reassure and temperature are applied thereto, thereby solid-phase diffusion joining the filaments in a tube shape. Reference 4 discloses a connecting method by butt joint, in which both end portions of superconductors to be connected are swaged with a copper sleeve to integrate them, and these end portions are butted against each other and connected.

Moreover, in Reference 5, 49 bundles of element wires having a structure in which approximately 10000 superconducting filaments arc embedded are made and further covered with a conduit to form a composite conductor having a predetermined diameter. Thereafter, from this composite conductor, a length of approximately 200 mm of the conduit is peeled off to take out the element wires inside, each element wire is processed with a processing roll so that the cross section becomes a hexagonal shape, and thereafter every seven element wires after being processed are inserted in a frame made of copper, to thereby form seven blocks in total. There is disclosed a method in which, subsequently, the seven blocks are swaged to be a regular hexagonal shape to obtain plural composite conductors in a rotation symmetrical shape of the sixth order, and end portions of these plural composite conductors are butted against each other to connect these composite conductors, that is, the superconducting filaments with each other.

Further, Reference 6 discloses a method in which superconducting filaments are inserted in a sleeve, this sleeve is subsequently inserted in, for example, a die formed of an upper frame and a lower frame, and the sleeve is pressurized until contact faces of the upper frame and the lower frame come in contact with each other to reduce the diameter thereof, so as to connect the superconducting filaments with each other in the sleeve.

Reference 1: JP-A 6-163140 (KOKAI)
Reference 2: JP-A 63-055875 (KOKAI)
Reference 3: JP-A 2-197017 (KOKAI)
Reference 4: JP-A 10-021976 (KOKAI)
Reference 5: JP-A 8-138821 (KOKAI)
Reference 6: JP-A 6-196341 (KOKAI)

However, in the connecting methods disclosed in above -described References 1 to 3, although there are advantage of resistance reduction and compactness of a connecting portion as compared to a method by soldering, all of them are methods that require processes to remove the stabilizing member from both the superconducting element wires, and dissolve and remove the stabilizing copper using acid such as a nitric acid solution to expose the filaments. Thus, handling related to the filaments and stabilizing material of superconducting wires is complicated, and operation efficiency is not always good.

For example, the filaments are ultrathin wires with a thickness of several tens µm, and thus there are problems of handling such that the filaments ignite due to friction between filaments, or the filaments in a connecting portion are oxidized when cleaning after connection is inappropriate and have a large connection resistance value, and do not pass the specified value of connecting portion resistance required in equipment designs. Further, since the process of using strong acid such as a nitric acid solution is necessary when the stabilizing material is removed, there are many const raints in handling of solutions, work environment of a connecting work area, and so on, and thus efficiency in terms of workability has not been good.

Further, in the connecting method described in Reference 4, it becomes possible to obtain predetermined low resistance connection by performing high-level processing (plainness, angularity, roughness, cleanliness, and so on) on end faces of heat treated superconductors to be connected, and under the conditions that heating (for example around 700 °C and pressurizing (for example at 1 MPa to 10 MPa) are performed in a vacuum or inert gas atmosphere. Therefore, highly advanced techniques and connecting devices are needed.

Moreover, in the method described in Reference 5, when the above -described composite conductors are obtained, each element wire exposed from the conduit is processed with the processing roll, and thus there is a problem that the processes are complicated Further, in the method described in Reference 6, reduction of diameter of the superconducting filaments in the sleeve can be performed only until the contact faces of the upper frame and lower frame come in contact with each other, and gaps occur among the superconducting filaments when the above-described connection is performed. This poses problems that the resistance increases, and sufficient superconducting characteristics cannot be obtained.

### Disclosure of the Invention

It is an abject of the present invention to connect superconductors with each other by a simple connecting operation while retaining resistance reduction of connecting portions of the superconductors, and thereby provide a superconducting coil.

One aspect of the present invention relates to a method of connecting superconductors (fir st connecting method) including, on superconducting element wires exposed from an end portion of a conduit covering a superconductor in which a channel is formed in a center portion and which covers a circumference of the channel, covering portions exposed from the end portion of the conduit with a conducting member in a state that the channel is absent, using a first shaping die and a second shaping die disposed opposing each other in a manner to avoid hitting against each other while pressing, disposing the conducting member between cavities formed by both the shaping dies, pressing the conducting member with at least one of the first shaping die and the second shaping die to reduce a diameter thereof, and after an end face of a superconducting element wire bundle of the conducting member reduced in diameter and an end face of a superconducting element wire bundle of another conducting member formed through the above -described steps are inserted together in a hollow pipe and the end faces are positioned wit h each other, heating and joining the end faces.

Further, one aspect of the present invention relates to a method of connecting superconductors (second connecting method) including, on superconducting element wires exposed from an end portion of a conduit covering a superconductor, covering portions exposed from the end portion of the conduit with a conducting member, using a first shaping die and a second shaping die disposed opposing each other in a manner to avoid hitting against each other while pressing, disposing the conducting member between cavities formed by both the shaping dies, pressing the conducting member with at least one of the first shaping die and the second shaping die to reduce a diameter thereof, and after an end face of a superconducting element wire bundle of the conducting member reduced in diameter and an end face of a superconducting element wire bundle of another conducting member formed through the above -described steps are inserted together in a hollow pipe and the end faces arc positioned with each other, heating and joining the end faces.

In the first connecting method, superconducting element wires exposed from an end portion of a conduit covering a superconductors in which a channel is formed in a center portion and which covers a circumference of the channel are covered with a conducting member in a state that the channel in portions exposed from the end portion of the conduit is removed, and thereafter pressed with a first shaping die and a second shaping die disposed opposing each other in a manner to avoid hitting against each other while pressing to reduce a diameter thereof.

Therefore, gaps among the plural superconducting wires forming the superconducting element wires exposed from the conduit can be reduced, and reduction resistance of the superconducting element wires can be achieved. That is, resistance reduction of the superconducting element wire bundle of the superconductor to be connected can be performed, and resistance reduction of connecting portions of the superconducting element wire bundle and the superconducting clement wire bundle of another superconductor produced similarly can be achieved. As a result, a superconducting coil achieving resistance reduction of the connecting portions can be provided.

Further, the superconducting element wires exposed from the conduit are reduced in diameter not by every line but at once, the process of resistance reduction accompanying the diameter reduction can be simplified.

Moreover, the superconducting element wire bundle reduced in diameter is inserted in the hollow portion of the hollow pipe in a manner to engage therewith, and is subjected to pressurizing and heat treatment, so as to join end faces with each other with another superconducting element wire bundle. Therefore, it is possible to quite easily join the superconducting element wire bundles with each other, that is, the superconductors and the other superconductor.

Further, in the second connecting method, superconducting element wires exposed from an end portion of a conduit covering a superconductor are covered with a conducting member in a state that the channel in portions exposed from the end portion of the conduit is removed, and thereafter pressed with a first shaping die and a second shaping die disposed opposing each other in a manner to avoid hitting against each other while pressing to reduce a diameter thereof.

Therefore, gaps among the plural superconducting wires forming the superc inducting element wires exposed from the conduit can be reduced, and reduction resistance of the superconducting clement wires can be achieved. That is, resistance reduction of the superconducting element wire bundle of the superconductor to be connected can be performed, and resistance reduction of connecting portions of the superconducting element wire bundle and the superconducting element wire bundle of another superconductor produced similarly can be achieved. As a result, a superconducting coil achieving resistance reduction of the connecting portions can be provided.

Further, the superconducting element wires exposed from the conduit are reduced in diameter not by every line but at once, the process of resistance reduction accompanying the diameter reduction can be simplified.

Moreover, the superconducting element wire bundle reduced in diameter is inserted in the hollow portion of the hollow pipe in a manner to engage therewith, and is subjected to pressurizing and heat treatment, so as to join end faces with each other with another superconducting element wire bundle. Therefore, it is possible to quite easily join the superconducting element wire bundles with each other, that is, the superconductor and the other superconductor.

Note that a main difference between the first connecting method and the second connecting method is that a channel is formed in a center portion in the superconductor in the first connecting method, while no channel is formed in a center portion in the superconductor in the second connecting method. Therefore, the superconductor provided for the first connecting method is assumed to be used mainly for a large -scale superconducting coil generating an upfield, such as an atomic fusion device or a superconducting energy storage system device, by allowing a cooling medium to flow in the channel, and the superconductor provided for the second connecting method is assumed to be used mainly for a power transmission line or the like, in which it is not necessary to allow a cooling medium to flow.

In addition, in an example, of the present invention, a cavity which is formed when the shaping dies arc overlapped with each other has a polygonal shape of at least triangle or greater, and the conducting member is pressed and reduced in diameter so that a cross section thereof becomes a polygonal shape of at least triangle or greater. In this case, correspondence of the superconducting element wires of the end face of the superconductor and the end face of the other superconductor with each other can be performed efficiently, and resistance reduction of the connecting portions of them can be performed along with the operation and effect of the above-described diameter redaction. As a result, it is possible to obtain the superconducting coil in which resistance reduction of the connecting portions of the superconductors is improved.

In this case, even when the superconducting clement wire bundle is divided into plural blocks by a stainless tape or the like for example, connecting portions thereof are reduced in diameter to be a polygonal shape, and they are inserted in the hollow portion of the hollow pipe in a manner to engage therewith and joined as described above. Thus, positions of the bloc ks of the superconducting element wire bundle and the other superconducting element wire bundle with each other can be aligned precisely, and it becomes possible to join the both of them in a manner that the stainless tape is not interposed on the joining face. Therefore, resistance reduction of the connecting portions of the superconductors can be achieved even in such a case.

In an example of the present invention, the cavity formed by the first shaping die and the second shaping die has a polygonal shape of pentagon or greater, In this case, it is possible to apply high pressure isotropically to the superconducting element wire bundle exposed from the conduit (and the conducting member), and it is possible to improve the degree of diameter reduction. Therefore, it is possible to further reduce gaps among the plural superconducting wires forming the superconducting element wire bundle, and it is possible to achieve further reduction in resistance of the superconducting element wire.

Further, in an example of the present invention, the cavity formed by the first shaping die and the second shaping die has a regular polygonal shape of regular pentagon or greater when pressing with the plural first shaping dies and the plural second shaping dies is performed, and the diameter reduced portion of the superconducting element wire bundle has a regular polygonal shape of regular pentagon or greater. In this case, the operation and effect of the above -described example can be exhibited more noticeably- Specifically, it is possible to further reduce gaps among the plural superconducting wires forming the superconducting element wire bundle, and it is possible to achieve further reduction in resistance of the superconducting clement wire.

Moreover, in an example of the present invention, a plurality of the first shaping dies and a plurality of the second shaping dies are disposed, particularly to oppose each other alternately. Accordingly, it is possible to uniformly reduce the diameters of connecting portions of superconductor with the above -described conducting member.

Further, in an example of the present invention, before the end face of the superconducting element wire bundles reduced in diameter is joined with the end face of the superconducting element wire bundle reduced in diameter of a superconductor formed separately, the end faces are covered with a metal film. Accordingly, irregularities in the surfaces of the end faces can be substantially eliminated, and connection n of the end faces with each other can be performed more reliably.

In addition, using separately from or together with the metal film, before the end face of the superconducting element wire bundle reduced in diameter is joined with the end face of another superconducting element wire bundle reduced in diameter, a metal sheet can be interposed between these end faces. Also in this case, the operation and effect similar to the above ones can be obtained.

By carrying out the steps as desc ribed above, it is possible to obtain a superconducting coil including a first superconductor and a second superconductor, a first conducting member in which at least an end portion of a first superconducting element wire bundle, which is exposed from an e nd portion of a conduit of the first superconductor and reduced in diameter to be a polygonal shape of triangle or greater, is covered in a manner conforming to an outer peripheral shape of a diameter reduced portion of the first superconducting clement wire bundle and in a manner that a first end face of the first superconducting element wire bundle is exposed, a second conducting member in which at least an end portion of a second superconducting element wire bundle, which is exposed from an end portion of a conduit of the second superconductor and reduced in diameter to be a same polygonal shape as that of the first superconductor, is covered in a manner conforming to an outer peripheral shape of a diameter reduced portion of the second superconducting element wire bundle, and in a manner that a second end face of the second superconducting element wire bundle is exposed, and a hollow pipe provided to engage with an outer peripheral portion of the first conducting member and an outer peripheral portion of the second conducting member in a state that the first end face and the second end face are joined.

As has been described, according to the present invention, it is possible to connect superconductors with each other by a simple connecting operat ion white retaining resistance reduction of connecting portions of the superconductors, and thereby provide a superconducting coil.

### BRIEF DESCRIPTION OF THE DRAWINGS

[FIG. 1] FIG. 1 is a process view for describing a method of connecting superconductors according to embodiments.
[FIG. 2] FIG.2 is likewise a process view for describing the method of connecting superconductors according to the embodiments.
[FIG. 3] FIG. 3 is likewise a process view for describing the method of connecting superconductors according to the embodiments.
[FIG. 4] FIG. 4 is likewise a process view for describing the method of connecting superconductors according to the embodiments.
[FIG. 5] FIG. 5 is likewise a process view for describing the method of connecting superconductors according to the embodiments.
[FIG. 6] FIG. 6 is likewise a process view for describing the method of connecting superconductors according to the embodiment.
[FIG. 7] FIG. 7 is likewise a process view for describing the method of connecting superconductors according to the embodiments.
[FIG. 8] FIG. 8 is likewise a process view for describing the method of connecting superconductors according to the embodiments.
[FIG. 9] FIG. 9 is likewise a process view for describing the method of connecting superconductors according to the embodiments.
[FIG. 10] FIG. 10 is likewise a process view for describing the method of connecting superconductors according to the embodiments.
[FIG. 11] FIG. 11 is likewise a process view for describing the method of connecting superconductors according to the embodiments.
[FIG. 12] FIG. 12 is likewise a process view for describing the method of connecting superconductors according to the embodiments.
[FIG. 13] FIG. 13 is likewise a process view for describing the method of connecting superconductors according to the embodiments.
[FIG. 14] FIG. 14 is likewise a process view for describing the method of connecting superconductors according to the embodiments.
[FIG. 15] FIG. 15 is likewise a process view for describing the method of connecting supercondutors according to the embodiments.
[FIG. 16] FIG. 16 is likewise a process view for describing the method of connecting superconductors according to the embodiments.
[FIG. 17] FIG.17 is likewise a process view for describing the method of connecting superconductors according to the embodiments.
[FIG. 18] FIG. 18 is likewise a process view for describing the method of connecting superconductors according to the embodiments.
[FIG. 19] FIG.19 is likewise a process view for describing the method of connecting superconductors according to the embodiments.
[FIG. 20] FIG, 20 is a schematic structural diagram of a superconducting coil according to the embodiments.
[FIG. 21] FIG. 21 is a schematic structural diagram illustrating a modification example of the Superconducting coil illustrated in FIG. 20.

### DETAILED DESCRIPTION

Hereinafter, details and other characteristics and advantages of the present invention will be described.

### (Method of connecting supercondutors)

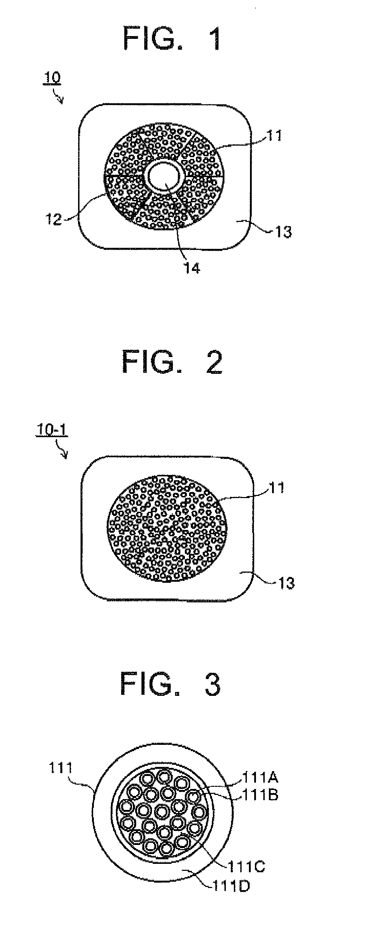

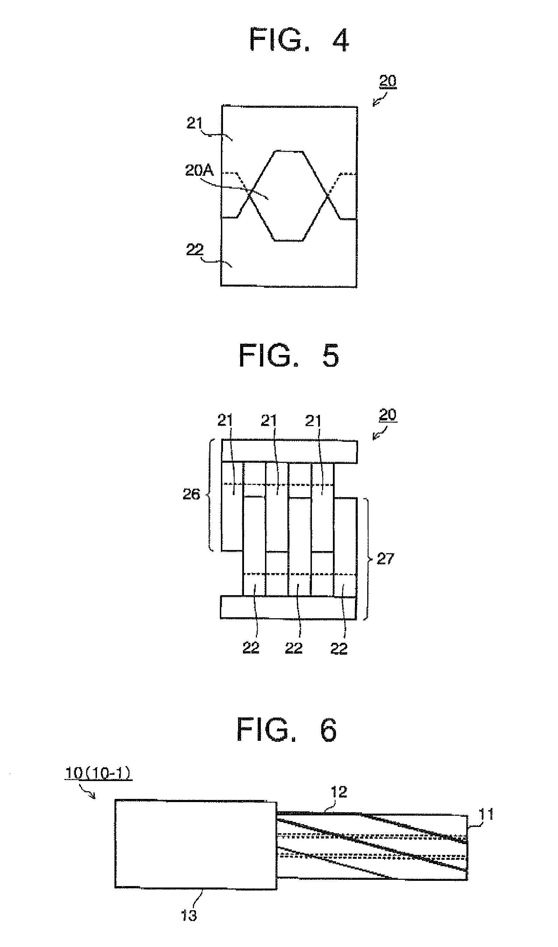

First, a method of connecting superconductors according to embodiments will be described. FIG. 1 to FIG. 19 are process views for describing the method of connecting superconductors of the embodiments, and particularly, FIG. 1 to FIG. 3 are structural views of superconductors according to the embodiments. FIG. 4 and FIG. 5 are views illustrating schematic structures of a metal die used in the embodiments.

PIG. 1 is a cross-sectional view illustrating a schematic structure of a superconductors related to a first embodiment, and FIG. 2 is a cross-sectional view illustrating a schematic structure of a superconductor related to a second embodiment. FIG. 3 is a cross-sectional view illustrating a schematic structure of a superconducting element wire forming the superconductors illustrated in FIG. 1 and FIG. 2. FIG. 4 is a front view illustrating a structure of the metal die, and FIG. 5 is a side view illustrating the structure of the metal die.

In addition, for the superconductor related to the first embodiment illustrated in FIG. 1 and the superconductor related to the second embodiment illustrated in FIG. 2, similar or same components arc denoted using the same reference numerals.

As illustrated in FIG. 1, in a superconductor 10 used in the first embodiment, for example, plural superconducting element wire 11, which are isolated in a block shape by a stainless tape 12 for example, are structured to surround the periphery of a channnel hole 14 formed for allowing a predetermined cooling medium to flow in a longitudinal direction of the superconductor 10, thereby forming a bundle. Further, the plural superconducting element wires 11 are covered with a conduit 13.

As illustrated in FIG. 2, in a superconductor 10-1 used in the second embodiment, plural superconducting element wires 11 are covered with a conduit 13 without being isolated in a block shape by a tape and without having a channel hole for allowing a cooling medium to flow.

Both of the superconducting element wires 11 illustrated in FIG. 1 and FIG. 2 can be formed by, for example, twisting three lines, each of which being formed by twisting three lines in total, one superconducting wire 111 and two copper wires, further twisting three twisted wires obtained, and twisting again two twisted wires obtained consequently.

The superconducting wire 111 can be obtained by, for example as illustrated in FIG. 3, covering the periphery of a superconducting filament 111A with a stabilizing cop per 111B, embedding plural such filaments in a copper material 111C, and covering the periphery thereof with a tubular member 111D such as copper or aluminum.

Note that the plural superconducting element wires 11 mean the same as a superconducting element wire bundle. Therefore, in the following, reference numeral 11 can mean the single superconducting element wire in some parts, and can mean the superconducting element wire bundle in other parts appropriately.

Further, in the first embodiment, the number of superconducting element wires 11 is six, but this number can be determined arbitrarily as necessary. Further, the channel hole 14 can be omitted as necessary.

The superconductor related to the first embodiment is assumed to be used mainly for a large-scale superconducting coil generating an upfield, such as an atomic fusion device or a superconducting energy storage system device, by allowing cooling medium to flow in the channel hole 14, and the superconductor related to the second embodiment is assumed to be used mainly for a power transmission line or the like, in which it is not necessary to allow a cooling medium to flow.

As illustrated in FIG. 4 and FIG. 5, the metal die 20 used in the embodiments include p lural first die pieces 21 and plural second die pieces 22, and the plural first die pieces 21 and the plural second die pieces 22 are arranged to be adjacent to each other in a state of being alternately reversed in an up and down direction or a left and right direction- Each of the plural first die pieces 21 and the plural second die pieces 22 opposing each other in pairs forms a cavity 20A having a polygonal shape, and cavities 20A are structured to communicate with each other.

The first die pieces 21 located on an upper side form an upper die 26, and the second die pieces 22 located on a lower side form a lower die 27. In addition, as illustrated in FIG. 4 and FIG. 5, by disposing the plural first die pieces 21 forming the upper die 26 and the plural second die pieces 22 forming the lower die 27 to oppose each other alternately, it is possible to uniformly reduce the diameters of connecting portions of superconductors with a conducting member, as will be described below.

The cavity 20A is made to have a polygonal shape having sides equal to that of pentagon or greater. In this case, as will be described below, it is possible to apply high pressure isotropically to the superconducting element wire bundle 11 exposed from the conduit 13 (and the conducting member covering this bundle), and it is possible to improve the degree of diameter reduction. Therefore, it is possible to further reduce gaps among the plural superconducting wires 111 forming the superconducting element wire bundle 1 1, and it is possible to achieve further reduction in resistance of the superconducting element wire.

However, it is preferred that the cavity 20A be at least a triangle or greater (in the case of triangle, for example, a tangle cavity is formed with a flat lower die and a crest-shaped upper die. Further, in the case of square, for example, a cavity having a square shape is formed by combining a triangle cavity formed by a crest-shaped lower die and a triangle cavity formed by a crest -shaped upper die).

Further, it is preferred that the cavity 20A further have a regular polygonal shape of a regular pentagon or greater when the superconducting element wire bundle 11 is pressed with the metal die 20 which will be described below. Thus, the diameter reduced portion of the superconducting element wire bundle 11 which will be described below can be formed to have a regular polygonal shape of a regular pentagon or greater. In this case, the operation and effect of the above-described example can be exhibited more noticeably-Specifically, it is possible to further reduce gaps among the plural superconducting wires 111 forming the superconducting element wire bundle 11, and it is possible to achieve further reduction in resistance of the superconducting element wire bundle 11,

In addition, examples of the polygon of pentagon or greater include a hexagon, an octagon, a decagon, a dodecagon, and so on, and examples of the regular polygon of regular pentagon or greater include a regular hexagon, a regular octagon, a regular decagon, a regular dodecagon, and so on. Further, a hexagon or a regular hexagon is preferred in the aspects of its most simple shape, possibility of cost reduction, and the like. In the embodiments, the shape of the cavity 20A is a hexagon, and the shape when being pressed is a regular hexagon.

Next, with reference to FIG. 6 to FIG. 19, a method of connecting superconductors in the embodiments will be described specifically.

In the case of the superconductor 10 in the first embodiment, first as illustrated in FIG. 6, an end portion of the conduit 13 is removed to expose the superconducting element wire bundle 11. At this time, the stainless tape 12 exposed on the surface may be removed as necessary or pulled into the conduit 13 if possible. Further, the channel hole 14 in the exposed portion of the superconducting element wire bundle 11 is removed as well.

On the other hand, in the case of the superconductor 10-1 in the second embodiment, as illustrated in FIG. 6, the end portion of the conduit 13 is removed to expose the superconducting element wire bundle 11 without removing the stainless tape and the channel, hole.

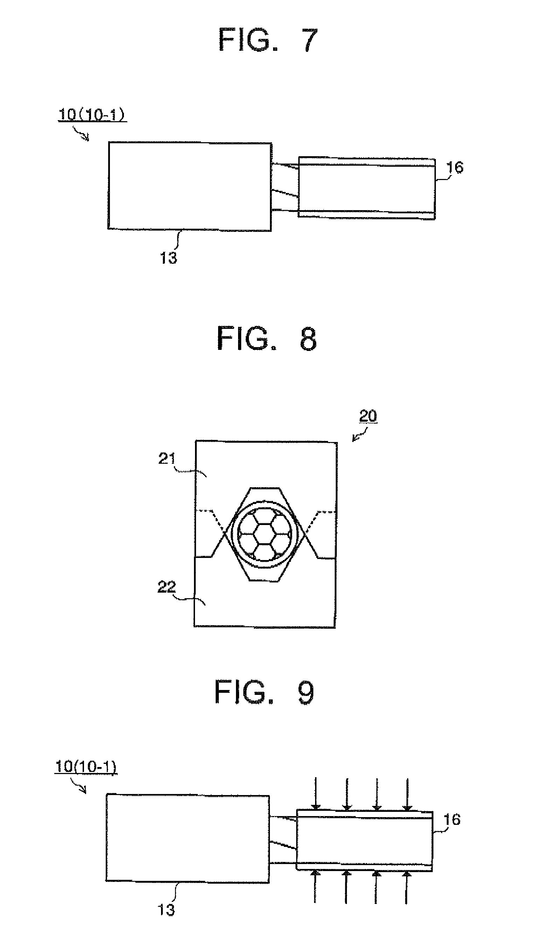

Next, in either case of the superconductor 10 of the first embodiment and the superconductor 10-1 of the second embodiment, as illustrated in FIG. 7, the exposed superconducting element wire bundle 11 is covered with a conducing member 16. In FIG. 7, although almost the entire expose superconducting element wire bundle 11 is covered with the conducting member 16, it will suffice to cover at least an end portion contributing to connection of superconductors with each other (end portion contributing to coupling in a hollow pipe) which will be described below.

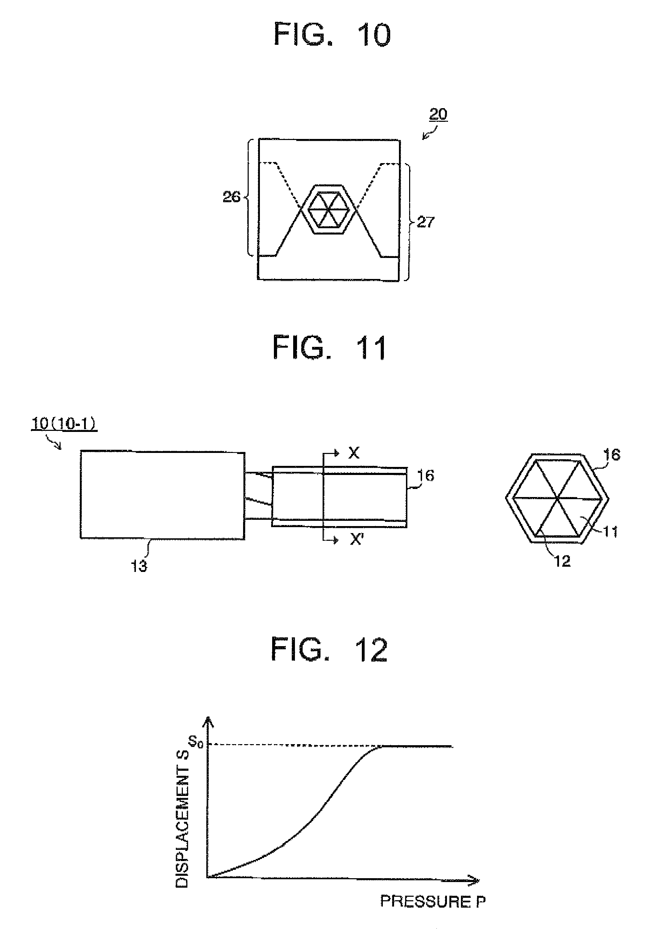

Next, as illustrated in FIG. 8 and FIG. 9, the portion of the superconducting element wire bundle 11 covered with the conducting member 16 is disposed in the cavities communicating with each other of the metal die 20, and the plural first die pieces 21 and the plural second die pieces 22, that is, the upper die 26 and the lower die 27 of the metal die 20 are pressed in the up and down direction, thereby reducing the diameter of the portion of the superconducting element wire bundle 11 covered with the conducting member 16 to be a polygonal shape, as illustrated in FIG. 10 and FIG. 11. Note that in the embodiments, although pressing with the metal die 20 is performed in the up and down direction, this direction may be not only the up and down direction but any other direction such as a left and right direction as long as it is possible to perform pressing.

Incidentally, in the case of the superconductor 10-1 of the second embodiment, the stainless tape denoted by numeral "12" in FIG. 11 and so on does not exist.

When pressing is performed, it can be performed by a method such that at least one of the upper die 26 and the lower die 27 of the metal die 20 is pressed with a not -illustrated pressing machine or the like, and the pressure applied during the pressing is increased gradually until a predetermined displacement (diameter reduction) S₀ is reached, as illustrated in FIG. 12.

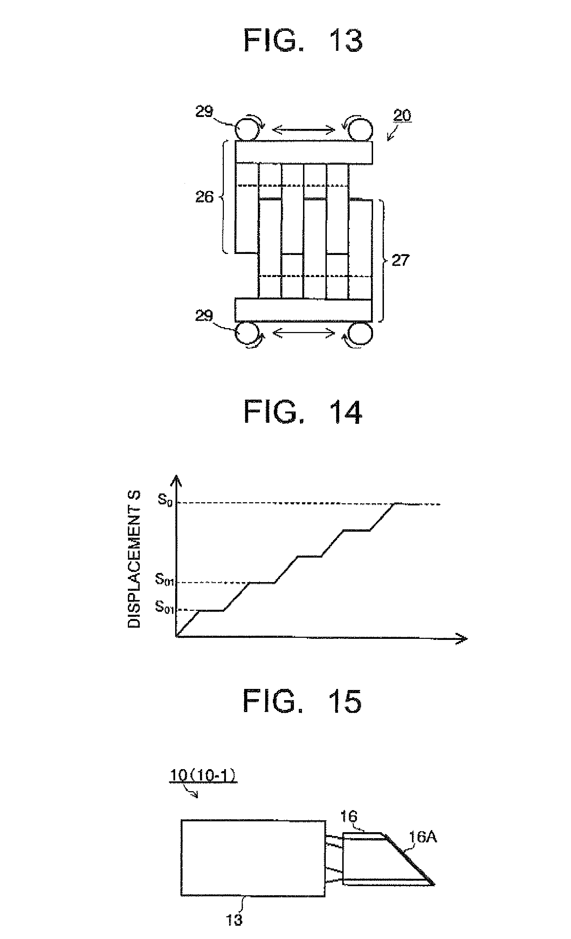

Further, as illustrated in FIG. 13. for example, the pressing can also be performed by applying pressures in a stepped manner such that a pair of rollers 29 is arranged on each of an upper face of the upper die 26 and a lower face of the lower die 27, the pairs of rollers 29 are moved in directions denoted by arrows on the upper and lower faces, and a displacement is generated by S₀₁ in every movement as illustrated in FIG. 14 for example until the predetermined displacement (diameter reduction) S₀ is reached.

In the embodiments, as described above, the shape of the cavity 20A is a hexagon, and the shape after pressing is a regular hexagon. Accordingly, as described above, it is possibly to apply high pressure isotropically to the superconducting element wire bundle 11 and the conducting member 16, and it is possible to improve the degree of diameter reduction. Therefore, it is possible to further reduce gaps among the plural superconducting wires 111 forming the superconducting element wire bundle 11, and it is possible to achieve further reduction in resistance of the superconducting wires 111, that is, the superconducting element wire bundle, 11 and the superconductor 10.

Next, in either case of the superconductor 10 of the first embodiment and the superconductor 10 -1 of the second embodiment, as illustrated in FIG. 15, the superconducting element wire bundle 11 reduced in diameter is cut together with the conducting member 16, so as to form a first end face 16A of the superconducting element wire bundle 11. Although this cutting can be performed perpendicularly to a longitudinal direction of the superconducting clement wire bundle 11, it is preferred that the cutting be performed at a predetermined angle to make a tapered shape as illustrated in FIG. 15. Thus, when it is connected with another superconductor which will be described below, a contact area between the superconducting element wire bundle 11 and the other superconducting element wire bundle to be connected can be increased. Therefore, connection of the superconductors with each other can be performed more reliably.

Further, although not particularly illustrated, it is also possible to cover the first end face 16A of the superconducting element wire bundles 11 reduced in diameter with a metal film. In this case, irregularities in the surface of the first end face 16A can be substantially eliminated, and connection of superconductor via the first end face 16A which will be described below can be performed more reliably.

In addiction, the method for forming the metal film and so on are not particularly limited, but it may be metal plating for example. Moreover, the metal film is needed to be formed of a good electric conductor, and can be formed of copper, gold, or the like for example.

Next, the other superconductor 10° or 10 -1' to be joined to the superconductor 10 or 10-1 is produced via the above -described similar processes. Note that, since the superconductor 10 and 10' and 10-1 and 10-1' have basically the same structure, form, and size, similar components in the following will be denoted using the same reference numerals or by adding a symbol'. However, the position of a tapered face of a second end face 16B of the superconductor 10' or 10-1' is reversed upside down for coupling to the first end face 16A of the superconductor 10 or 10-1.

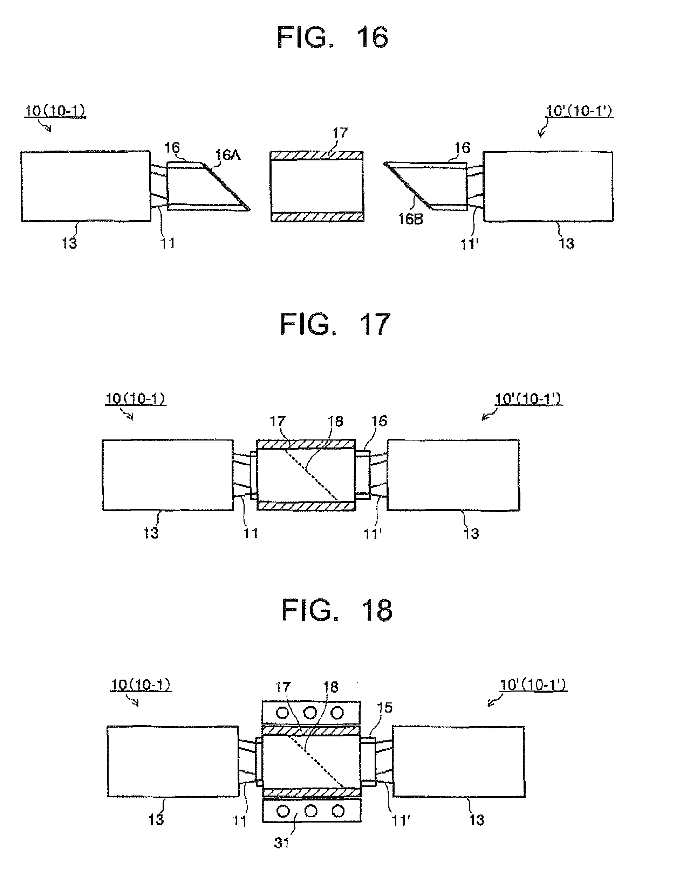

Next, as illustrated in FIG. 16, the first end face 16A of the superconducting element wire bundle 11 reduced in diameter and the second end face 16B of the superconducting element wire bundle 11' reduced in diameter similarly are inserted in a hollow pipe 17 having a hollow portion, which has the same size and shape as those of the reduced diameter portions, and pressurized to be in contact and heated, thereby joining the first end face 16A and the second end face 16B (see FIG. 17).

In this process, before the first end face 16A of the superconducting element wire bundle 11 and the second end face 16B of the superconducting element wire bundle 11' arc pressurized to be in contact, a not-illustrated metal sheet can be interposed between the first end face 16A and the second end face 16B. Also in this case, the metal sheet is capable of substantially eliminating irregularities of the first end face 16A and the second end face 16B, and thus connection of the superconductors 10 and 10' and the superconductors, 10-1 and 10-1' via the first end face 16A and the second end face 16B can be performed more reliably.

In addition, interposition of the metal sheet can be used together with, for example, the above-described covering of the first end face 16A with the metal film or can be independent. The metal sheet can be formed from copper for example,

further, as illustrated in FIG. 16, when the first end face 16A and the second end face 16B arc coupled, particularly when forming of the above-descfibed metal film or interposition of the metal sheet are not performed, these end faces are cleaned using solvent or the like, thereby removing organic substances or the like in advance that hinder the coupling.

Moreover, the above-described heating operation can be performed by, for example as illustrated in FIG. 18, arranging a heating furnace 31 surrounding the hollow pipe 17, that is, a coupling face 18 between the first end face 16A and the second end face 16B as illustrated in FIG. 17. The heating furnace 31 can also be structured to heat apply pressure to the hollow pipe 17 simultaneously as heating the pipe.

Although the above -described heating time depends on the structure of the superconductor 10 and 10' or 10-1 and 10-1', it can be performed under the conditions of, for example, 650 °C and 15 minutes When Nb₃Sn is used as the superconducting filament 111A. Further, pressure of a few kgf/mm² can also be applied.

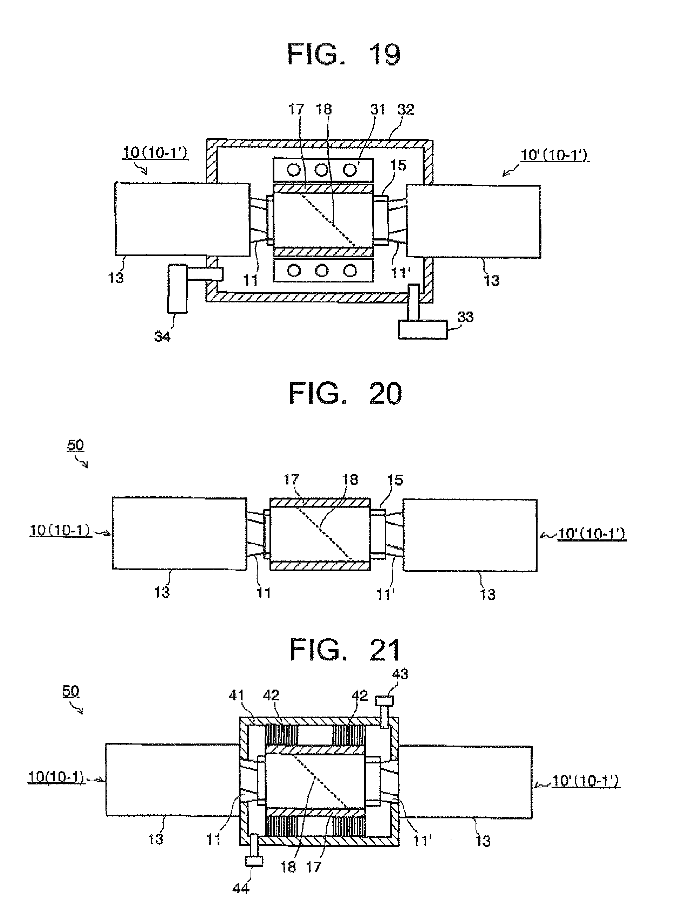

Further, as illustrated in FIG. 19, it is also possible that the hollow pipe 17 is placed in a predetermined container 32 together with the heating furnace 31, the inside of the container 32 is evacuated to, for example, about 0.2 Pa to 1 Pa with a not-illustrated vacuum pump via a port 33, an d thereafter the above-described heating operation is performed while argon gas is delivered via a port 32 at 5 L/min and is exhausted via the port 33.

By carrying out the processes as described above, it is possible to quite simply join the superconducting element wire bundle 11 and the superconducting element wire bundle, 11' with each other, that is, the superconductor 10 and the superconductor 10' or the superconductors 10 -1 and 10-1' with each other.

In addition, by carrying out the processes illustrated in FIG. 16 to FIG. 19, connecting portions of the superconducting element wire bundle 11 and the superconducting element wire bundle 11' are reduced in diameter to be a regular hexagonal shape, and they are inserted in the hollow port ion of the hollow pipe 17 in a manner to engage therewith and joined. Thus, positions of the element wires (11 and 11') of the superconducting clement wire bundle 11 and the superconducting element wire bundle 1' can be aligned precisely, and in the case of the superconductor 10 in the first embodiment, the superconducting element wire bundles 11 and 11' can be joined without interposing a stainless tape or the like on the joining face. Therefore, also from such a point of view, it is possible to achieve resistance reduction of the connecting portions of the superconductors 10 and 10' or the superconductors 10 -1 and 10-1'.

### (Superconducting coil)

Next, a superconducting coil in the embodiments will be described. Note that the superconducting coil is a resultant product of the above -described method of connecting superconductors, and employs a Structure with an external appearance as illustrated in FIG. 20.

F1G. 20 is a schematic structural diagram of the superconducting coil in the embodiments. As illustrated in FIG. 20, the superconducting coil 50 of the embodiments has a structure such that the superconductors 10 and 10' or the superconductors 10 -1 and 10-1' are connected with each other.

Specifically, it has the conducting m ember 16 in which the superconducting element wire bundle 11, which is exposed from the end portion of the conduit of the superconductor 10 or 10 -1 and reduced in diameter to be a regular hexagonal shape, is covered in a manner conforming to its outer peripheral shape and banded in a manner that the first end face 16A is exposed, and the conducting member 16 in which the superconducting element wire bundle 11', which is exposed from the end portion of the conduit of the superconductor 10' or 10-1' and reduced in diameter similarly to be a hexagonal shape, is covered in a manner conforming to the outer peripheral shape of a diameter reduced portion of the superconducting element wire bundle 11 and banded in a manner that the second end face 16B is exposed. Further, it has the hollow pipe 17 provided so as to engage with outer peripheral portions or the conducting members 16 in a state that the first end face 16A and the second end face 15B are joined.

In addition, when the metal film is formed on at least one of the first end face 16A and the second end face 16B according to the above-described connecting method, the metal film exists on this end face, namely, the coupling face 18.

Further, when the metal sheet is interposed between the first end face 16A and the second end face 16B, the metal sheet exists on the coupling face 18.

Moreover, when the superconductors 10 and 10' have the channel hole 14 for allowing a cooling medium to flow, also the superconducting coil 50 has the channel 14.

In the superconducting coil 50 of the embodiments, since the connecting portions of the superconducting element wire bundle 11 and the superconducting element wire bundle 11' arc reduced in diameter to be a regular hexagonal shape, and they are inserted in the hollow portion of the hollow pipe 17 in a manner to engage therewith and joined, positions of the element wires (11 and 11') of the superconducting element wire bundle 11 and the superconducting element wire bundle 11' can be aligned precisely. Further, also when the plural superconducting clement wires 11 are isolated in a block shape by the stainless tape 12 as in the superconducting coil 10 of the first embodiment, it becomes possible to join the superconducting element wire bundles 11. and 11' in a manner that the stainless tape 2 is not interposed on the joining face. Therefore, resistance reduction of the connecting portions of the superconductors 10 and 10' can be achieved, and resistance reduction of the superconducting coil 50 can be achieved.

Further, on the coupling face 18, the first end face 16A and the second end face 16B formed in a tapered shape arc coupled while being in contact, the coupling area of the superconducting element wire bundle 11 and the superconducting element wire bundle 11', that is, the superconductors 10 and 10' or the superconductors 10-1 and 10-1' can be increased. As a consequence, the superconducting coil 50 which is strongly coupled and is highly reliable can be obtained.

Incidentally, cooling of the superconducting coil 50 of the embodiments is performed by, for example, allowing a cooling medium to flow in the channel hole 14.

FIG. 21 is a modification example of the superconducting coil illustrated in F1G. 20. The superconducting coil 50 of the embodiments is such that, the portions of the superconductors 10 and 10' or the superconductors 10-1 and 10-1' exposed from the conduit 13 are arranged in a predetermined container 41, and these portions are fixed to the container 41 indirectly by fixing the hollow pipe 18 with a fixing jig 42 fixed to the container 41. Further, ports 43 and 44 are provided respectively on an upper portion and a lower portion of the container 41.

The superconducting coil 50 of th e embodiments can be cooled by, for example, allowing a cooling medium to flow in the channel hole 14, and by delivering the cooling medium into the container 41 also via the port 43.

In the connecting portions of the superconductors 10 and 10', that is, the portions covered with the hollow pipe 18, the channel, hole 14 is pressed and disappeared because the superconducting element wire bundles 11 and 11' are reduced in diameter. Therefore, the cooling medium flowing in the channel hole 14 leaks to the outside from the superconducting element wire bundles 11 and 11' in the connecting portions, and cooling of the superconductors 10 and 10' in the connecting portions becomes insufficient.

However, in the embodiments, the connecting portions are disposed in the container 41 to forcibly cool these portions, and hence the aforementioned disadvantage can be avoided.

Incidentally, the cooling medium delivered into the container 41 via the port 43 can be discharged to the outside via the port 44 or it can be structured such that the cooling medium is delivered into the channel hole 14 of the superconductor 10 or 10'.

In the foregoing, although the present invention has been described in detail based on the specific examples, the present invention is not limited to these specific examples, and any modification or change of the invention may be made without departing from the scope of the present invention.

For example, in the specific examples, the metal die is used as the shaping die, but a shaping die made of a different material such as ceramic can also be used.

## Claims

1. A method of connecting superconductors, the method comprising:
on superconducting element wires exposed from an end portion of a conduit covering a superconductor in which a channel is formed in a center portion and which covers a circumference of the channel, covering portions exposed from the end portion of the conduit with a conducting member in a state that the channel is absent;
using a first shaping die and a second shaping die disposed opposing each other in a manner to avoid hitting against each other while pressing, disposing the conducting member between cavities formed by both the shaping dies;
pressing the conducting member with at least one of the first shaping die and the second shaping die to reduce a diameter thereof; and
after an end face of a superconducting element wire bundle of the conducting member reduced in diameter and an end face of a superconducting element wire bundle of another conducting member formed through the above-described steps are inserted together in a hollow pipe and the end faces are positioned with each other, heating and joining the end faces.

2. A method of connecting superconductors, the method comprising:
on superconducting element wires exposed from an end portion of a conduit covering a Superconductor, covering portions exposed from the end portion of the conduit with a conducting member;
using a first shaping die and a second shaping die dispose d opposing each other in a manner to avoid hitting against each other while pressing, disposing the conducting member between cavities formed by both the shaping dies;
pressing the conducting member with at least one of the first shaping die and the second shaping die to reduce a diameter thereof; and
after an end face of a superconducting element wire bundle of the conducting member reduced in diameter and an end face of a superconducting element wire bundle of another conducting member formed through the above-described steps are inserted together in a hollow pipe and the end faces arc positioned with each other, heating and jointing the end faces.

3. The method of connecting superconductors according to claim 1,
wherein a cavity which is formed when the shaping dies are overlapped with each other has a polygonal shape of at least triangle or greater, and the conducting member is pressed and reduced in diameter so that a cross section thereof becomes a polygonal shape of at least triangle or greater.

4. The method of connecting superconductors according to claim 2,
wherein a cavity which is formed when the shaping dies are overlapped with each other has a polygonal shape of at least triangle or greater, and the conducting member is pressed and reduced in diameter so that a cross section thereof becomes a polygonal shape of at least triangle or greater,

5. The method of connecting superconductors according to claim 1,
wherein a plurality of the first shaping dies and a plurality of the second shaping dies are disposed.

6. The method of connecting superconductors according to claim 2,
wherein a plurality of the first shaping dies and a plurality of the second shaping dies arc disposed.

7. The method of connecting superconductors according to claim 5,
wherein a plurality of the first shaping dies and a plurality of the second shaping dies are disposed to oppose each other alternately,

8. The method of connecting superconductors according to claim 6,
wherein a plurality of the first shaping dies and a plurality of the second shaping dies are disposed to oppose each other alternately.

9. The method of connecting superconductors according to claim 3,
wherein the cavity formed by the first shaping die and the second shaping die has a polygonal sha pe of pentagon or greater.

10. The method of connecting superconductors according to claim 4,
wherein the cavity formed by the first shaping die and the second shaping die has a polygonal shape of pentagon or greater.

11. The method of connecting superconductors according to claim 9,
wherein the cavity formed by the first shaping die and the second shaping die has a regular polygonal shape of regular pentagon or greater when pressing with the first shaping die and the second shaping die is performed, and the diameter reduced portion of the superconducting element wire bundle has a regular polygonal shape of regular pentagon or greater.

12. The method of connecting superconductors according to claim 10,
wherein the cavity formed by the first shaping die and the second shaping die has a regular polygonal shape of regular pentagon or greater when pressing with the first shaping die and the second shaping die is performed, and the diameter reduced portion of the superconducting element wire bundle has a regular polygonal shape of regular pentagon or greater.

13. The method of connecting superconductors according to claim 1. further comprising
before the end face of the superconducting element wire bundle of the conducting member seduced in diameter and the end face of the superconducting element wire bundles of the other conducting member arc heated and joined, covering the end feces with a metal film.

14. The method of connecting superconductors according to claim 2, further comprising,
before the end face of the superconducting element wire bundle of the conducting member reduced in diameter and the end face of the superconducting element wire bundle of the other conducting member arc heated and joined, covering the end faces with a metal film.

15. The method of connecting superconductors according to claim 13,
wherein the metal film is a plating film.

16. The method of connecting superconductors according to claim 14,
wherein the metal film is a plating film.

17. The method of connecting superconductors according to claim 1, further comprising,
before the end face of the superconducting element wire bundle of the conducting member reduced in diameter and the end face of the superconducting element wire bundle of the other conducting member a re heated and joined, interposing a metal sheet between the end faces.

18. The method of connecting superconductors according to claim 2, further comprising,
before the end face of the superconducting element wire bundle of the conducting member reduced in diameter and the end face of the superconducting element wire bundle of the other conducting member are heated and joined, interposing a metal sheet between the end faces,

19. A superconducting coil, comprising:
a first superconductor and a second superconductor;
a first conducting member in which at least an end portion of a first superconducting element wire bundle, which is exposed from an end portion of a conduit of the first superconductor and reduced in diameter to be a polygonal shape of triangle or greater, is covered in a manner conforming to an outer peripheral shape of a diameter reduced portion of the first superconducting element wire bundle and in a manner that a first end face of the first superconducting element wire bundle is exposed ;
a second conducting member in which at least an end portion of a second superconducting element wire bundle, which is exposed from an end portion of a conduit of the second superconductor and reduced in diameter to be same polygonal shape as that of the first superconductor, is covered in a manner conforming to an outer peripheral shape of a diameter reduced portion of the second superconducting element wire bundle, and in a manner that a second end face of the second superconducting element wire bundle is exposed; and
a hollow pipe provided to engage with an outer peripheral portion of the first conducting member and an outer peripheral portion of the second conducting member in a state that the first end face and the second end face are joined.

20. The superconducting coil according to claim 19,
wherein the diameter reduced portion of the first superconducting element wire bundle and the diameter reduced portion of the second superconducting element wire bundle have, along with the first conducting member and the second conducting member, a regular polygonal shape of regular pentagon or greater,

21. The superconducting coil according to claim 19, further comprising,
a metal film disposed on at least one of the first end face and the second end face.

22. The superconducting coil according to claim 21,
wherein the metal film is a plating film.

23. The superconducting coil according to claim. 19, further comprising,
a metal sheet interposed between the first end face and the second end face.

24. The superconducting coil according to claim 19,
wherein in a portion including the conduit of at least one of the first superconductor and the second superconductor, there is formed a channel hole penetrating in a longitudinal direction through a center portion thereof in a diametrical direction and allowing a cooling medium to flow.

25. The superconducting coil according to claim 19. further comprising,
a cooling device cooling the first superconducting element wire bundle, which is exposed from the end portion of the conduit of the first superconductor and reduced in diameter to be a polygonal shape, end the second superconductíng element wire bundle, which is exposed from the end portion of the conduit of the second superconductor and reduced in diameter to be a polygonal shape.
